# EUROPÄISCHE PATENTSCHRIFT

(11) **EP 2 781 294 B1**
(45) Veröffentlichungstag und Bekanntmachung des Hinweises auf die Patenterteilung: **06.12.2017**
(21) Anmeldenummer: 14160556.8
(22) Anmeldetag: 18.03.2014
(51) Int. Cl.: B23K 11/00, B23K 37/02

(54) **Schweißmaschine, insbesondere Gitterschweißmaschine, mit wenigstens zwei versetzbaren Schweißvorrichtungen**
Welding machine, in particular grid welding machine, with at least two adjustable welding devices
Machine à souder, en particulier soudeuse de treillis, dotée d'au moins deux dispositifs de soudage mobiles

(30) Priorität: 18.03.2013 DE 202013101150 U
(43) Veröffentlichungstag der Anmeldung: 24.09.2014
(73) Patentinhaber: Ideal-Werk C. & E. Jungeblodt GmbH & Co.KG, 59557 Lippstadt (DE)
(72) Erfinder: Jungeblodt, Max Clemens, 59555 Lippstadt (DE)
(74) Vertreter: Graefe, Jörg

(56) Entgegenhaltungen:
- EP-A2- 0 399 992
- AT-B- 413 956
- CN-U- 202 199 961

## Beschreibung

Die vorliegende Erfindung betrifft eine Schweißmaschine mit wenigstens zwei versetzbaren Schweißvorrichtungen,
- wobei jede Schweißvorrichtung wenigstens eine erste Elektrode aufweist,
- wobei jede erste Elektrode zusammen mit einer von mehreren zweiten Elektrode zum Aneinanderschweißen zweier Bauteile zu einem Produkt verwendbar ist,
- wobei die Schweißmaschine wenigstens eine Traverse aufweist,
- wobei jede Schweißvorrichtung einen Klemmmechanismus aufweist und die Schweißvorrichtungen mittels der Klemmmechanismen an die wenigstens eine Traverse in wählbaren Positionen festklemmbar sind,
- wobei die Schweißmaschine wenigstens eine Positioniervorrichtung hat,
- wobei die Schweißmaschine wenigstens eine erste Linearführung mit einem führenden Teil und wenigstens einem geführten Teil hat, wobei das wenigstens eine geführte Teil von der wenigstens einen Positioniervorrichtung umfasst ist und entlang dem geführten Teil verschiebbar ist,
- wobei die wenigstens eine Positioniervorrichtung wenigstens ein erstes Kupplungsmittel hat und jede Schweißvorrichtung wenigstens ein zweites Kupplungsmittel hat und das wenigstens eine erste Kupplungsmittel und jeweils eines der wenigstens einen zweiten Kupplungsmittel miteinander kuppelbar sind,
- wobei die wenigstens eine Positioniervorrichtung ein Lösemittel hat, um den Klemmmechanismus einer angekuppelten Schweißvorrichtung von der Traverse zu lösen
- wobei ein Gewicht einer an die wenigstens eine Positioniervorrichtung angekuppelten Schweißvorrichtung ganz oder zumindest überwiegend von der wenigstes einen Positioniervorrichtung getragen ist, was - mit anderen Worten ausgedrückt - bedeutet, dass die Schweißvorrichtungen ohne Kupplung mit der Positioniervorrichtung nicht verschiebbar sind.

Aus dem Dokument CN 20219996 U scheint eine solche Schweißmaschine bekannt zu sein. Das Dokument EP 0 399 992 A2 offenbart eine ähnliche Schweißmaschine, bei der jedoch das Positioniermittel kein Lösemittel zum Lösen der Verbindung zwischen der Traverse und der Schweißvorrichtung aufweist.

Gemeinsam ist den aus den genannten Dokumenten bekannten Schweißmaschinen, dass die Schweißvorrichtungen an der Traverse oder einer oder mehreren Traversen geführt sind. Die Schweißmaschinen weisen dazu eine oder mehrere Linearführungen auf. Bei der Schweißmaschine gemäß dem Dokument CN 20219996 U sind die Schweißvorrichtungen über drei Linearführungen geführt. Jede Linearführung ist eine Laufrollenführung. Die Schweißmaschine gemäß dem Dokument EP 0 399 992 A2 weist eine Laufrollenführung auf. Auch die Positioniermittel sind über Linearführungen geführt.

Die beiden genannten Schweißmaschinen sind zum Schweißen von Längsdrähten und Querdrähten zu Gittern geeignet. Damit Gitter mit unterschiedlichen Abständen der Längsstäbe geschweißt werden können, können die Schweißvorrichtungen in einer Richtung quer zu den Längsstäben versetzt werden. Zum Versetzen der Schweißvorrichtungen wird der Klemmmechanismus gelöst, dieses geschieht mittels der an die Schweißvorrichtung angekoppelten Positioniervorrichtung. Nachdem die Verbindung zwischen der Traverse und dem Klemmmechanismus gelöst ist, können die Positioniervorrichtung und die angekoppelte Schweißvorrichtung gemeinsam in ihren Linearführungen verschoben werden.

Linearführungen im Allgemeinen und Laufrollenführungen im Besonderen, weisen ein führendes Teil, häufig eine Schiene, und ein geführtes Teil, häufig einen Schlitten oder einen Wagen, auf. Damit eine gute Führung erreicht werden kann, muss das geführte Teil eine gewisse Länge in der Verschieberichtung haben. So kann ein Verkanten verhindert werden.

Die für die gute Führung der geführten Teile einer Linearführung erforderliche Länge in Querrichtung, d.h. in der Erstreckungsrichtung der Traverse, macht eine Breite der Schweißvorrichtungen in eben dieser Querrichtung erforderlich. Haben die Schweißvorrichtungen eine Mindestbreite, hat dieses einen Mindestabstand der Längsstäbe des durch die Schweißmaschine zu fertigenden Gitters zur Folge. Allerdings gibt es eine Nachfrage nach Gittern, bei denen dieser Mindestabstand unterschritten werden soll.

Selbst wenn die beiden genannten Schweißmaschinen nur zum Schweißen von Längsdrähten und Querdrähten zu Gittern geeignet sein sollten, gibt es auch andere Anwendungen von Schweißmaschinen. So betrifft die Erfindung nicht nur das Schweißen von Gittern mit einer Gitterschweißmaschine, sondern auch das Schweißen von Blechen und Profilen. So können mit derartigen Schweißmaschinen insbesondere auch zwei Bleche aneinander, Profile oder Drähte an Bleche, Profile an Drähte, zwei Profile aneinander und vieles mehr geschweißt werden. In allen diesen Anwendungen gibt es eine Nachfrage nach Schweißmaschinen, bei denen ein möglichst geringer Abstand der Schweißvorrichtungen erreicht werden soll.

Aus dem Dokument AT 413 956 B ist eine eingangs genannte Schweißmaschine bekannt, bei der mindestens 50% des Gewichtes, also das Gewicht ganz oder zumindest überwiegend, einer an die wenigstens eine Positioniervorrichtung angekuppelten Schweißvorrichtung von der wenigstes einen Positioniervorrichtung getragen ist. D.h. mit anderen Worten, dass die Schweißvorrichtungen ohne Kupplung mit der Positioniervorrichtung nicht verschiebbar sind.

Eine Positioniervorrichtung der Schweißmaschine gemäß dem Dokument AT 413 956 weist einen Verstellwagen auf, der auf einer unteren und einer oberen Führungsschiene verfahrbar angeordnet ist. Der Verstellwagen ist das geführte Teil der ersten Linearführung. Die Führungsschienen bilden das führende Teil der ersten Linearführung. An dem Verstellwagen sind drei verschiebbar angetriebene Stößel vorgesehen, von denen zwei dazu dienen, eine form- und kraftschlüssige Verbindung zwischen der Positioniervorrichtung herzustellen. Einer dieser zwei Stößel bewirkt auch, dass eine erste Seite der Schweißvorrichtung von der ersten Traverse gelöst werden kann. Zum vollständigen, allseitigen Lösen der Schweißvorrichtung von der Traverse muss der dritte Stößel verschoben werden. Erst dann kann die Positioniervorrichtung mit der angekuppelten Schweißvorrichtung auf der Führungsschiene verfahren werden. Für jeden der Stößel ist ein Antrieb notwendig. Alle Stößel müssen mittels des Antriebs in Positionen gefahren werden können, in denen die Positioniervorrichtung ohne angekuppelte Schweißvorrichtung frei verfahren werden kann, und in Positionen gefahren werden können, in denen an die Positioniervorrichtung eine Schweißvorrichtung angekuppelt und von der Traverse gelöst ist und in der die Positioniervorrichtung zusammen mit der angekuppelten Schweißvorrichtung verfahren werden kann.

Die drei Stößel und ihre Antriebe sind Kupplungs- und/oder Lösemittel, die an dem Verstellwagen der Positioniervorrichtung befestigt sind. Nur diese Kupplungs- und/oder Lösemittel zusammen können ein Kuppeln der Schweißvorrichtung an die Positioniervorrichtung und ein Lösen der Schweißvorrichtung von der Traverse erreichen. Die zum Kuppeln und Lösen vorgesehenen Mittel bilden einen komplexen Mechanismus.

Hier setzt die vorliegende Erfindung an.

Der vorliegenden Erfindung liegt die Aufgabe zugrunde, eine Schweißmaschine vorzuschlagen, bei der die Teile der Schweißmaschine, die zum Kuppeln der Schweißvorrichtung an die Positioniervorrichtung und ein Lösen der Schweißvorrichtung von der Traverse vorgesehen sind, einfacher ausgeführt sein können als bei bekannten Schweißvorrichtungen.

Diese Aufgabe wird von einer eingangs beschriebenen Schweißmaschine dadurch gelöst, dass das Lösemittel und das erste Kupplungsmittel einen einzigen gemeinsamen Linearantrieb umfassen. Bei dem Antrieb kann es sich zum Beispiel um einen Hydraulik oder Pneumatikzylinder, einen Antrieb mit einer Antriebskette oder einen Gewindetrieb handeln.

Anders als bei der aus dem Dokument AT 413 956 B bekannten Schweißmaschine wird nur ein Linearantrieb benötigt, um die Positioniervorrichtung mit der Schweißvorrichtung zu kuppeln und die Schweißvorrichtung von der Traverse zu lösen. Bei der Schweißmaschine nach dem Dokument AT 413 956 B sind schon zum Kuppeln und teilweisen Lösen zwei Hydraulik- oder Pneumatik-Klemmzylinder vorgesehen. Zum vollständigen Lösen der Schweißvorrichtungen von der Traverse sind zwei weitere Hydraulik-oder Pneumatik-Lüftungszylinder notwendig.

Vorteilhaft sind die Schweißvorrichtungen nicht über eine Linearführung mit der Traverse verbunden. Die Schweißvorrichtungen werden im angekuppelten Zustand von der Positioniervorrichtung getragen. Es kann aber im Rahmen der Erfindung liegen, wenn die Schweißvorrichtungen ein Stützelement, zum Beispiel ein Rolle aufweisen, über welche ein Teil des Gewichtes in den Maschinenrahmen geleitet wird.

Vorteilhaft wird das Gewicht der an die wenigstens eine Positioniervorrichtung angekuppelten Schweißvorrichtung ganz oder zumindest überwiegend über die wenigstens eine Positioniervorrichtung in die Linearführung eingeleitet. D.h., dass auch die Positioniervorrichtung nur über die Linearführung an einem Maschinenrahmen oder dergleichen befestigt ist.

Dadurch, dass den Schweißvorrichtungen im Unterschied zum Stand der Technik keine Linearführungen zugeordnet sind, entlang derer sie in der Querrichtung verschiebbar sind, muss keine Mindestbreite der Schweißvorrichtungen zur Erzielung einer guten Führung eingehalten werden. Die Breite der Schweißvorrichtungen kann daher so gewählt werden, wie es für eine sichere Befestigung der Schweißvorrichtungen an der Traverse oder für die Ausführung der Schweißvorrichtungen im Hinblick auf den Schweißvorgang notwendig oder sinnvoll ist.

Ein weiterer Vorteil einer erfindungsgemäßen Schweißmaschine ist, dass durch den Wegfall einer Führung der Schweißvorrichtungen die Maschinenelemente und Bauteile zur Realisierung eben dieser Führungen gespart werden können.

Es ist möglich, dass die Positioniervorrichtung mittels eines Antriebs, zum Beispiel eines Motors, einer von einem Motor angetriebenen Kette, eines Seils oder eines Zugelements, eines Schrittmotors, eines Linearantriebes wie zum Beispiel einem Hubzylinder oder ähnliches in der Querrichtung verfahrbar ist. Ebenso könnte eine Zahnstange und/oder ein mitfahrender Motor eingesetzt werden. Der Antrieb kann mit einer Steuerung verbunden sein, so dass die Positioniervorrichtung an eine gewünschte Position verschoben werden kann, ohne dass ein Bediener Hand an die Positioniervorrichtung legen muss. Die Steuerung kann eine Programmsteuerung sein.

Die Positioniervorrichtung kann über Weg- und/oder Positionssensoren verfügen, mit denen die Position der Positioniervorrichtung elektronisch erfasst werden kann. Diese Sensoren können mit einer Anzeige und/oder mit der Steuerung verbunden sein.

Die wenigstens eine Positioniervorrichtung einer erfindungsgemäßen Schweißmaschine kann eine zweite Linearführung mit einem führenden Teil und einem geführten Teil aufweisen. Diese zweite Linearführung ist in der Positioniervorrichtung vorgesehen, wobei das führende Teil der zweiten Linearführung mit dem geführten Teil der ersten Linearführung fest verbunden ist, während das geführte Teil der zweiten Linearführung und das geführte Teil der ersten Linearführung zueinander verschiebbar verbunden sind. An dem geführten Teil der zweiten Linearführung können Mittel angebracht sein, die zum Beispiel dem Versetzen der Schweißvorrichtungen dienen. Die zweite Linearführung ermöglicht es, diese Mittel in eine Position zu bringen, in welcher sie mit der Schweißvorrichtung verbunden werden, während diese Mittel mit der zweiten Linearführung in eine andere Position gebracht werden, wenn die Positioniervorrichtung ohne angekuppelte Schweißvorrichtung verfahren wird und dabei eine oder mehrere positionierte Schweißvorrichtungen passiert.

Das wenigstens eine Kupplungsmittel der Positioniervorrichtung einer erfindungsgemäßen Schweißmaschine kann mit dem geführten Teil der zweiten Linearführung fest verbunden sein. Fest verbunden bedeutet, dass die Verbindung während des ungestörten Betriebs einschließlich der Einrichtung der Schweißmaschine nicht gelöst wird.

Auch das Lösemittel kann mit dem geführten Teil der zweiten Linearführung fest verbunden sein.

Die wenigstens eine Positioniervorrichtung einer erfindungsgemäßen Schweißmaschine kann eine Feder aufweisen, die zwischen einem ersten Stützelement und einem zweiten Stützelement abgestützt ist, wobei das erste Stützelement fest mit dem führenden Teil der zweiten Linearführung verbunden ist und das zweite Stützelement mit dem geführten Teil der zweiten Linearführung verbunden ist. Bei der Feder kann es sich um eine Spiraldruckfeder oder um eine andere geeignete Feder handeln. Diese Feder kann dazu geeignet und eingerichtet sein, das geführte Teil der zweiten Linearführung und die daran angebrachten Mittel in die Position zu bringen und in dieser zu halten, in welcher das Positioniermittel ohne angekuppelte Schweißvorrichtung vorbei an den Schweißvorrichtungen verschoben werden kann.

Die vorgenannten Mittel können neben dem gemeinsamen Linearantrieb auch im Übrigen gemeinsame Teile umfassen, dass heißt insbesondere, dass Teile sowohl zum Kuppeln der Positioniervorrichtung an eine Schweißvorrichtung als auch zum Lösen der Klemmverbindung zwischen dem Klemmmechanismus und der Traverse genutzt werden können.

Der Klemmmechanismus der Schweißvorrichtungen einer erfindungsgemäßen Schweißmaschine kann eine Feder und eine Klemmbacke umfassen, wobei die Klemmbacke von der Feder mit einer Kraft zum Festklemmen der Schweißvorrichtung an der Traverse beaufschlagt ist und die Klemmbacke gegen die Kraft der Feder zum Lösen der Klemmverbindung zwischen Schweißvorrichtung und Traverse verschiebbar ist. Bei der Feder kann es sich um eine Spiraldruckfeder handeln. Die Federkonstante dieser Feder ist vorteilhaft größer als die Federkonstante der Feder in der Positioniervorrichtung.

Das Lösemittel der wenigstens einen Positioniervorrichtung kann zumindest mit dem Klemmmechanismus einer angekuppelten Schweißvorrichtung verbunden sein oder verbunden werden. Mittels des Linearantriebs des Lösemittels können die Klemmbacken des Klemmmechanismus gegen die Kraft der Feder des Klemmmechanismus zum Lösen der Klemmverbindung zwischen Schweißvorrichtung und Traverse verschoben werden. Die Feder des Klemmmechanismus einer von der Positioniervorrichtung gelösten Schweißvorrichtung klemmt somit die Schweißvorrichtung stets in einer Position fest an die Traverse. Erst durch das Lösen dieser Klemmverbindung mittels des Lösemittels der Positioniervorrichtung durch Verschieben der Klemmbacke gegen die Kraft der Feder ist es möglich, die Schweißvorrichtung zu verschieben.

Die Traverse einer erfindungsgemäßen Schweißmaschine kann eine Schwalbenschwanznut aufweisen. In dieser Schwalbenschwanznut können je zwei gegeneinander bewegliche Klemmbacken der Klemmmechanismen der Schweißvorrichtungen angeordnet sein. Zwischen den beiden Klemmbacken der Klemmmechanismen können die Federn der Klemmmechanismen angeordnet sein, die die Klemmbacken auseinander drücken. Die Klemmbacken sind zum Klemmen gegen die Nutwände der Schwalbenschwanznut der Traverse geeignet und eingerichtet.

Das Lösemittel und/oder das erste Kupplungsmittel können eine Klaue aufweisen, die mit jeweils einem Zapfen des Klemmmechanismus einer der Schweißvorrichtungen verbindbar ist. Diese Klaue kann ein gemeinsames Teil des Lösemittels und des ersten Kupplungsmittels sein. Die Klaue kann mit einem Abtrieb des Linearantriebs verbunden sein und dadurch mittels des Linearantriebs bewegbar sein. Die Klaue kann zum Kuppeln der Positioniervorrichtung mit einer Schweißvorrichtung hinter einen Pilzkopf oder ähnliches des zweiten Kupplungsmittels greifen. Durch Ziehen an der Klaue kann der bezüglich der zweiten Linearführung beweglich geführte Teil der Positioniervorrichtung gegen die Kraft der Feder der Positioniervorrichtung gegen die Schweißvorrichtung gezogen werden. Dabei können komplementäre Elemente der ersten und der zweiten Kupplungsmittel, zum Beispiel konische Erhebungen und konische Vertiefungen, ineinander greifen. Dadurch kann eine form-und kraftschlüssige Verbindung zwischen der Positioniervorrichtung und der mit dieser gekuppelten Schweißvorrichtung hergestellt werden.

Der Pilzkopf oder eine vergleichbare Struktur des zweiten Kupplungsmittels einer Schweißvorrichtung kann fest mit der beweglichen Klemmbacke des Klemmmechanismus verbunden sein. Zieht der Linearantrieb, nachdem die Positioniervorrichtung mit der Schweißvorrichtung gekuppelt ist, weiter an dem Pilzkopf oder der vergleichbaren Struktur, kann die bewegliche Klemmbacke gegen die Kraft der Feder des Klemmmechanismus gezogen werden, um sie von der Traverse zu lösen und ein Verschieben der an die Positioniervorrichtung angekuppelten Schweißvorrichtung zu ermöglichen.

Vorteilhaft ist die Positioniervorrichtung durch die erste Linearführung mit und ohne angekuppelte Schweißvorrichtung frei verschiebbar.

Die erfindungsgemäße Schweißmaschine kann wenigstens eine erste Stromschiene zur Stromversorgung der jeweils ersten Elektrode jeder Schweißvorrichtung aufweisen, wobei die Schweißvorrichtung ein Kontaktelement aufweist, welches im angeklemmten Zustand der Schweißvorrichtung elektrischen Kontakt zu der wenigstens einen ersten Stromschiene hat und welches bei gelöstem Klemmmechanismus frei von der wenigstens einen ersten Stromschiene ist. Das Kontaktelement kann über Federn gegenüber der übrigen Schweißvorrichtung abgestützt sein, wobei die Feder das Kontaktelement im festgeklemmten Zustand der Schweißvorrichtung gegen die Stromschiene drücken, so dass ein guter elektrischer Kontakt zwischen der Stromschiene und dem Kontaktelement hergestellt ist. Das Kontaktelement kann innerhalb der Schweißvorrichtung über eine elektrische Leitung, zum Beispiel ein Kabel, mit der ersten Elektrode verbunden sein.

Gemäß der Erfindung können durch das Lösen der Klemmverbindung zwischen der Schweißvorrichtung und der Traverse im an die Positioniervorrichtung angekuppelten Zustand der Schweißvorrichtung die Federn zwischen dem Kontaktelement und der übrigen Schweißvorrichtung soweit entlastet werden, dass die Schweißvorrichtung auch trotz einer Anlage des Kontaktelements an der Stromschiene verschoben werden kann.

Jede Schweißvorrichtung einer erfindungsgemäßen Schweißvorrichtung kann einen zweiten Linearantrieb aufweisen, mit welchem die wenigstens eine erste Elektrode der Schweißvorrichtung fahrbar ist, insbesondere zum Fahren der ersten Elektrode gegen die zweite Elektrode zum Zwecke des Schweißens.

Jede Schweißvorrichtung kann die zweite Elektrode aufweisen, wobei diese in einem Elektrodenhalter gehalten ist, wobei der Elektrodenhalter ebenfalls mit dem Klemmmechanismus der Schweißvorrichtung an der Traverse festklemmbar ist. In einem solchen Fall ist die Schweißvorrichtung eine einteilige Einheit, wie zum Beispiel auch in dem Dokument CN 202199961 U oder in dem Dokument EP 0 399 992 A2 beschrieben ist.

Ebenso ist es möglich,
- dass jede Schweißvorrichtung eine zweite Elektrode aufweist, die in einem Elektrodenhalter gehalten ist, und
- dass der Elektrodenhalter mit einem zweiten Klemmmechanismus der Schweißvorrichtung in wählbaren Positionen an einer zweiten Traverse festklemmbar ist,
- dass die wenigstens eine Positioniervorrichtung wenigstens ein drittes Kupplungsmittel hat und jeder Elektrodenhalter wenigstens ein viertes Kupplungsmittel hat oder mit einem solchen verbunden ist und das wenigstens eine dritte Kupplungsmittel und jeweils eines der wenigstens einen vierten Kupplungsmittel mit einander kuppelbar sind,
- dass die wenigstens eine Positioniervorrichtung ein zweites Lösemittel hat, um den zweiten Klemmmechanismus eines angekuppelten Elektrodehalters von der zweiten Traverse zu lösen, wobei ein Gewicht eines an die wenigstens eine Positioniervorrichtung angekuppelten Elektrodenhalters und ggf. weitere damit fest verbundener Teile lediglich von der wenigstes einen Positioniervorrichtung getragen ist.
In diesem Fall sind die Elektroden in zwei Einheiten der Schweißvorrichtung angeordnet, die an den zwei verschiedenen Traversen festgeklemmt werden können und nicht unmittelbar miteinander verbunden sind. Beide können gleichzeitig an die Positioniervorrichtung angekuppelt werden, um versetzt zu werden.

Es liegt außerdem im Rahmen der Erfindung, dass weitere Einrichtungen einer erfindungsgemäßen Schweißmaschine, die in der Querrichtung positionierbar sind, mittels der Positioniervorrichtung versetzt werden können. Es kann sich dabei zum Beispiel um Einrichtungen für die Positionierung von Bauteilen während der Schweißung oder für die Zuführung von Bauteilen handeln. Es kann sich dabei insbesondere um Anschläge oder Ausrichteinheiten handeln. Vorzugsweise werden die weiteren Einrichtungen wie auch die Schweißvorrichtungen während des Einrichtens der Maschine versetzt.

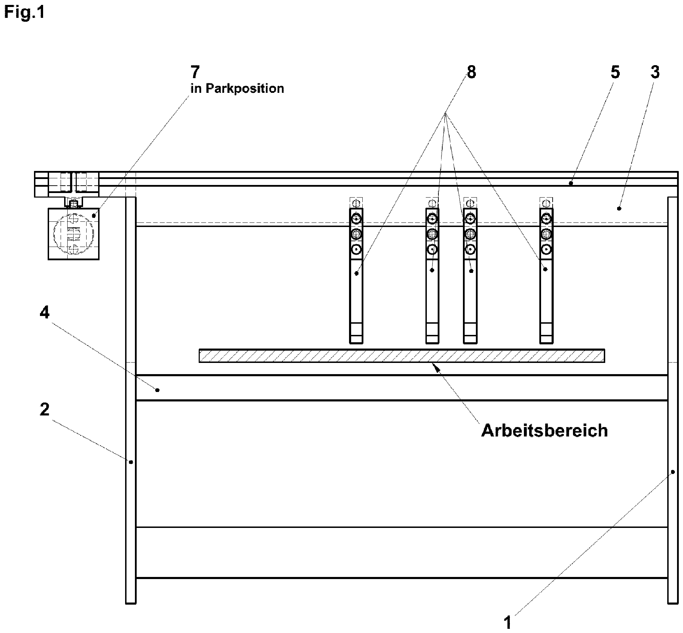

Ein Ausführungsbeispiel einer erfindungsgemäßen Schweißmaschine wird anhand der Zeichnung näher erläutert. Es zeigt in schematischer und vereinfachter Darstellung
- Fig. 1: die Schweißmaschine in einer Frontansicht mit einer Positioniervorrichtung in einer Parkposition,

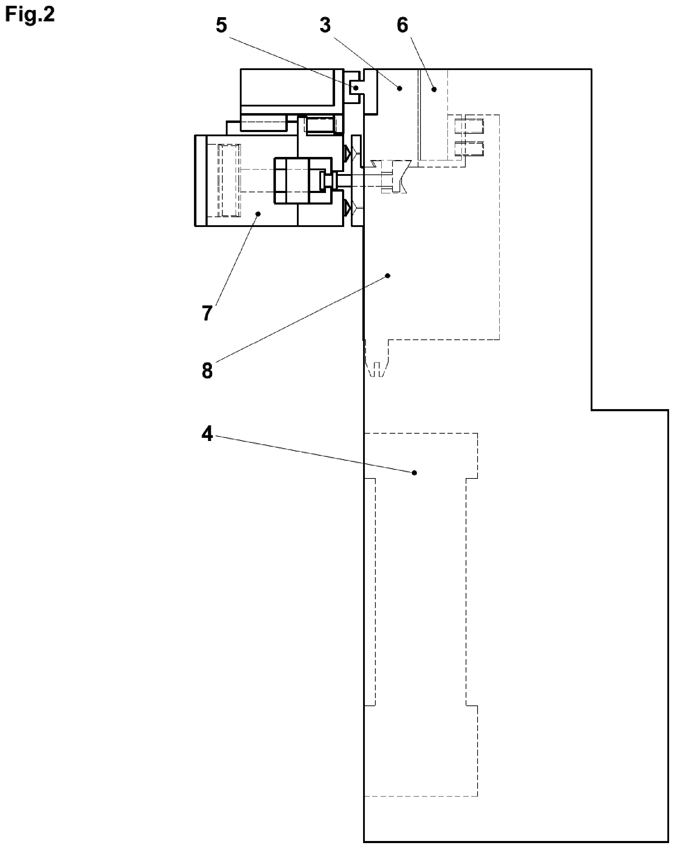

- Fig. 2: eine Seitenansicht der Schweißmaschine,

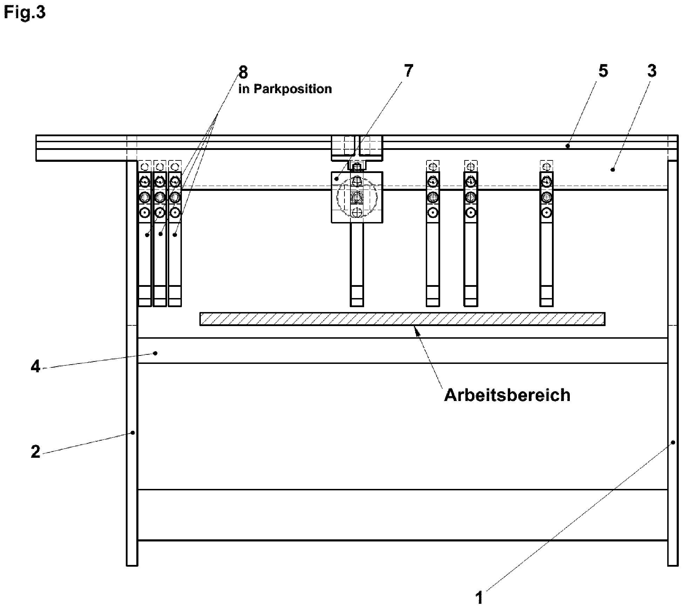

- Fig. 3: eine Frontansicht der Schweißmaschine mit der Positioniervorrichtung in einer Gebrauchsstellung,
- Fig. 4: einen Schnitt durch die Schweißmaschine entlang der Linie IV-IV in Figur 3 mit der Positioniervorrichtung bereit zum Ankuppeln einer Schweißvorrichtung,

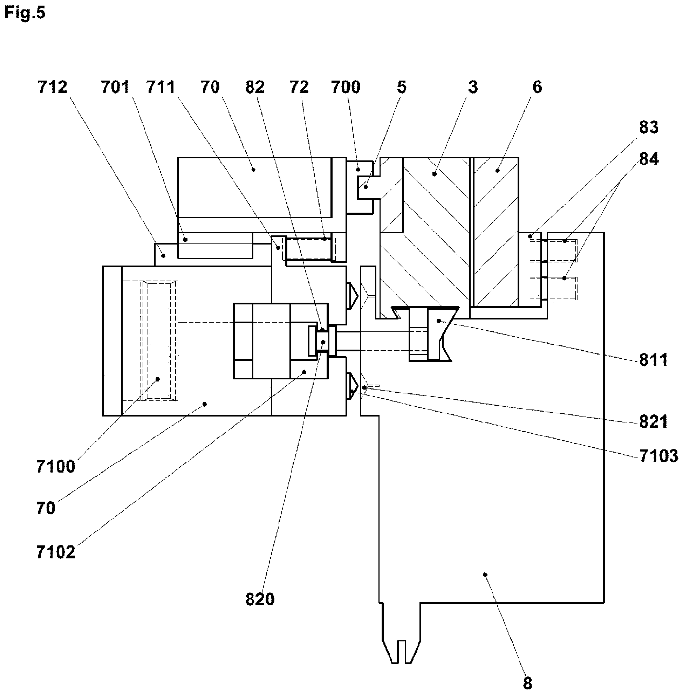

- Fig. 5: einen Schnitt durch die Schweißmaschine entlang der Linie V-V in Fig. 3 mit der Positioniervorrichtung bereit zum Ankuppeln der Schweißvorrichtung,

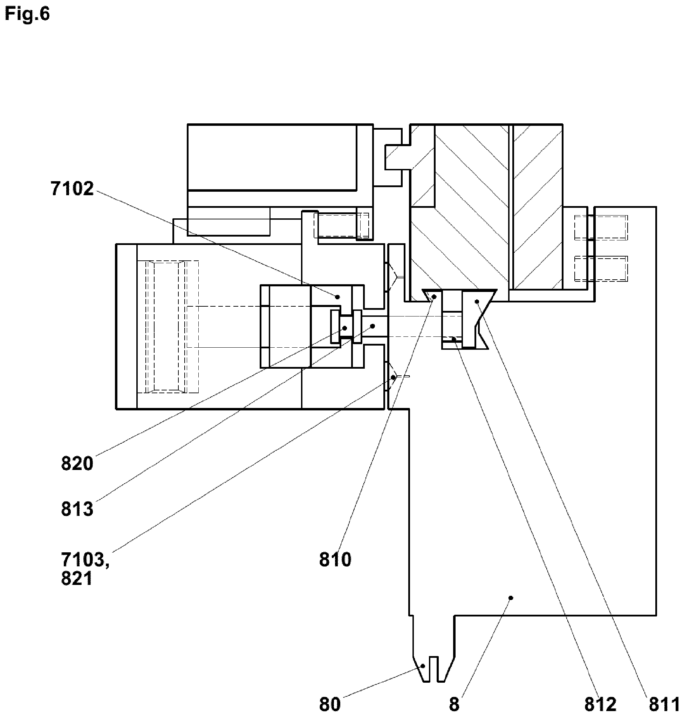

- Fig. 6: einen Schnitt durch die Schweißmaschine entlang der Linie V-V in Fig. 3 mit der Positioniervorrichtung nach dem Ankuppeln der Schweißvorrichtung jedoch vor dem Lösen einer Klemmverbindung zwischen der Schweißvorrichtung und einer Traverse und

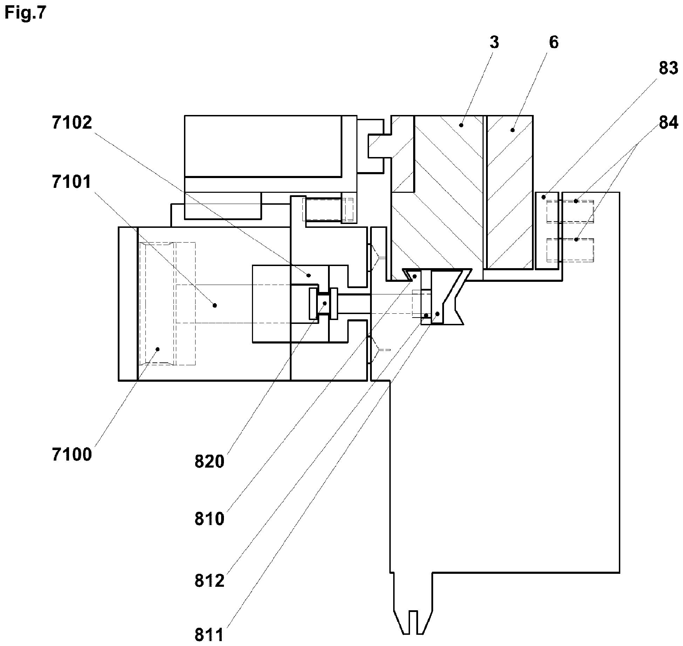

- Fig. 7: einen Schnitt durch die Schweißmaschine entlang der Linie V-V in Fig. 3 mit der Positioniervorrichtung nach dem Ankuppeln der Schweißvorrichtung und nach dem Lösen der Klemmverbindung zwischen der Schweißvorrichtung und der Traverse.

Die erfindungsgemäße Schweißmaschine S, eine Gitterschweißmaschine, weist einen Maschinenrahmen mit einem rechten Maschinenständer 1 und einem linken Maschinenständer 2 auf, die über eine erste, obere Traverse 3 und eine zweite, untere Traverse 4 miteinander verbunden sind. Parallel zur oberen Traverse 3 erstreckt sich eine Laufschiene 5. Diese erstreckt sich nicht nur zwischen den beiden Maschinenständern 1, 2, sondern überragt den linken Maschinenständer 2 seitlich.

Die Laufschiene 5 bildet ein führendes Teil einer ersten Linearführung. Diese erste Linearführung wird vervollständigt durch ein geführtes Teil 700, welches von der Positioniervorrichtung 7 umfasst ist. Die Positioniervorrichtung 7 ist auf der Laufschiene 5 verschiebbar.

Ebenfalls parallel zur oberen Traverse 3 ist eine Stromschiene 6 angeordnet.

An der oberen Traverse 3 sind mehrere Schweißvorrichtungen 8 befestigt, nämlich festgeklemmt. Die Klemmverbindung zwischen der Traverse 3 und den Schweißvorrichtungen 8 sind lösbar und die Schweißvorrichtungen 8 können in unterschiedlichen Positionen an der Traverse 3 befestigt werden. Bei der dargestellten Schweißmaschine ist ein Arbeitsbereich vorgesehen, in welchem die Schweißvorrichtungen 8 positioniert sind, wenn sie bei der Herstellung eines Produktes in einem Schweißvorgang benutzt werden. Dieser Arbeitsbereich A liegt in einem mittleren Bereich der Traverse 4 zwischen den Maschinenständern 1, 2. Zwischen dem in der Mitte angeordneten Arbeitsbereich A und den Maschinenständern 1, 2 sind sogenannte Parkbereiche P vorgesehen, in die die Schweißvorrichtungen 8 gefahren werden können, falls sie während der Schweißvorgänge, für die die Schweißmaschine eingerichtet ist, nicht gebraucht werden.

Die umfassen eine erste, obere Elektrode 80. Jede Schweißvorrichtung 8 umfasst auch eine zweite, untere Elektrode, die jedoch nicht dargestellt ist. Diese untere Elektrode ist in einem Elektrodenhalter (ebenfalls nicht dargestellt) angeordnet, der an der unteren Traverse 4 befestigt ist. Die obere Elektrode 80 ist mittels eines nicht dargestellten Linearantriebes zum Zwecke des Schweißens in Richtung zur unteren Elektrode fahrbar. Dabei fährt die obere Elektrode 80 gegen ein oberes Bauteil, zum Beispiel einen Querdraht eines herzustellenden Drahtgitters. An der unteren Elektrode liegt dann ein unteres Bauteil, zum Beispiel ein Längsdraht des herzustellenden Drahtgitters an. Die beiden Bauteile werden mittels der erfindungsgemäßen Schweißmaschine S auf an und für sich bekannte Art und Weise geschweißt. Die Schweißung erfolgt dabei vorteilhaft nicht nur an einer Stelle. Der Querdraht wird vorteilhaft gleichzeitig auf mehrere Längsdrähte geschweißt. Für jede Schweißung ist eine der Schweißvorrichtungen 8 vorgesehen.

Die Positioniervorrichtung 7 weist neben dem geführten Teil 700 der ersten Linearführung weitere Teile auf. Das geführte Teil 700 der ersten Linearführung und damit fest verbundene Teile der Positioniervorrichtung 7 werden nachfolgend als Schlitten 70 bezeichnet. Dieser Schlitten 70 umfasst neben dem geführten Teil 700 der ersten Linearführung ein führendes Teil 701 einer zweiten Linearführung und ein erstes Stützelement 702.

An dem Schlitten 70 der Positioniervorrichtung sind miteinander verbundene Lösemittel und erste Kupplungsmittel 710 sowie ein zweites Stützelement 711 über die zweite Linearführung verschiebbar gelagert. Das Lösemittel und das damit verbundene Kupplungsmittel werden nachfolgend zusammen als Löse- und Kupplungsmittel bezeichnet, da Elemente beider Mittel sowohl für den Zweck des Lösens als auch den Zweck des Kuppelns verwendet werden. Die zweite Linearführung weist ein geführtes Teil 712 auf, an dem das Löse- und Kupplungsmittel 710 fest angebracht ist. Zwischen dem ersten Stützelement 702 und dem zweiten Stützelement 711, Erstgenanntes fest mit dem führenden Teil 701 der zweiten Linearführung verbunden und Zweitgenanntes mit dem geführten Teil 704 der zweiten Linearführung verbunden, ist eine Druckfeder 72 angeordnet. Diese Druckfeder 72 drückt das geführte Teil 712 der zweiten Linearführung und die damit fest verbundenen Teile 710, 711 der Positioniervorrichtung 7 in eine Position, in der die Positioniervorrichtung 7 nicht an eine Schweißvorrichtung 8 angekuppelt ist und frei auf der Laufschiene 5 der ersten Linearführung verschoben werden kann.

Das Löse- und Kupplungsmittel 710 der Positioniervorrichtung 7 weist einen Linearantrieb 7100 auf, im Fall des Ausführungsbeispiels handelt es sich dabei um einen Pneumatikzylinder. An einer Kolbenstange 7101 des Pneumatikzylinders ist eine Klaue 7102 vorgesehen, die Teil des ersten Kupplungsmittels und des Lösemittels ist. Außerdem sind zwei konische Erhebungen 7103 vorgesehen, die ebenfalls Teil des ersten Kupplungsmittels sind.

Die Klemmverbindung zwischen den Schweißvorrichtungen 8 und der oberen Traverse 3 erfolgt über eine Schwalbenschwanznut 30 in der oberen Traverse 3 und Klemmbacken 810, 811, nämlich einer festen Klemmbacke 800 und einer beweglichen Klemmbacke 811 der Schweißvorrichtung 80. Die Klemmbacken 810, 811 haben eine zu den Nutwänden der Schwalbenschwanznut 30 komplementäre Form und beide sind in die Schwalbenschwanznut eingesetzt. Beide Klemmbacken 810, 811 haben einen Abstand voneinander, so dass sich zwischen den beiden Klemmbacken ein Freiraum ergibt. In diesen Freiraum ist eine Druckfeder 812 eingesetzt, die sich an beiden Klemmbacken 810, 811 abstützt und diese auseinander und gegen die Nutwände der Schwalbenschwanznut 31 drückt. Die beiden Klemmbacken 810, 811 und die Druckfeder 812 sind Teil eines Klemmmechanismus 81, zu dem im Weiteren wenigstens eine Stange 813 zählt. Diese Stange 813 ist fest mit der beweglichen Klemmbacke 811 verbunden und durchgreift ein Loch in der festen Klemmbacke 810, welche die Stange 813 führt. Das nicht mit der beweglichen Klemmbacke 811 verbundene Ende der Stange 813 ragt aus der festen Klemmbacke 810 heraus. An diesem Ende ist ein Bund vorgesehen, welcher dem Ende das Aussehen eines Pilzkopfes 820 gibt. In einem Abstand zu diesem Bund ist ein zweiter Bund vorgesehen. Durch eine Zug an der Stange 813 kann die bewegliche Klemmbacke 811 gegen die Kraft der Druckfeder 812 von der Nutwand der Schwalbenschwanznut 31 gelöst werden, wodurch die Klemmverbindung zwischen der Schweißvorrichtung 8 und der oberen Traverse 3 gelöst wird. Die Schweißvorrichtung 8 ist dann von der oberen Traverse 3 gelöst und kann an anderer Stelle der Traverse 3 an dieser festgeklemmt werden.

An der Seite, an welcher die Stange 813 aus der festen Klemmbacke 810 herausragt, sind zwei konische Ausnehmungen 821 vorgesehen. Diese konischen Ausnehmungen 821 und der Pilzkopf 820 an dem Ende der Stange 813 sind zweite Kupplungsmittel 82, mit denen die Schweißvorrichtung 8 an die Positioniervorrichtung 7 gekuppelt werden kann.

Die Schweißvorrichtungen weisen je ein Kontaktelement 83 zur oberen Stromschiene 6 auf, das mit der oberen Elektrode 80 elektrisch verbunden ist. Dieses Kontaktelement 83 ist über Federn 84 gegen die obere Stromschiene 6 gedrückt, damit im festgeklemmten Zustand stets ein guter Kontakt zwischen der Stromschiene 6 und dem Kontaktelement 84 besteht.

Der Schweißstrom kann von der oberen Stromschiene 6 über das Kontaktelement 83 der Schweißvorrichtung, über eine mit dem Kontaktelement 83 verbundene, nicht dargestellte elektrische Leitung zur oberen Elektrode 80 und von dort in das obere Bauteil fließen. Über die beiden Bauteile fließt der Strom in die untere Elektrode, die ebenfalls über ein nicht dargestelltes Kontaktelement elektrisch mit einer nicht dargestellten unteren Stromschiene verbunden ist. Die Stromschienen sind mit der Sekundärseite eines nicht dargestellten Schweißtransformators verbunden, der den Schweißstrom bereitstellt und dessen Primärseite mit einem Versorgungsnetz verbunden ist.

Damit Gitter mit unterschiedlichen Abständen der Längsdrähte geschweißt werden können, können die Schweißvorrichtungen 8 einschließlich der oberen Elektrode 80 und der unteren Elektrode versetzt werden. Zum Versetzen einer der Schweißvorrichtungen 8 wird die Klemmverbindung zwischen dieser Schweißvorrichtung 8 und der oberen Traverse 3 gelöst. Dieses geschieht mittels der Positioniervorrichtung.

Das Versetzen der Schweißvorrichtung 8 mittels der Positioniervorrichtung 7 erfolgt beim in den Figuren dargestellten Ausführungsbeispiel nur für den an der oberen Traverse 3 festgeklemmten Teil der Schweißvorrichtung 8. Die zweite, untere Elektrode, Elektrodenhalter und andere Teile der Schweißvorrichtung 8, die mit der unteren Traverse verbunden sind, werden bei dem Ausführungsbeispiel von Hand versetzt, was auf an sich bekannte Art und Weise erfolgt und daher nicht näher beschrieben ist. Es liegt aber im Umfang der Erfindung, auch die an der unteren Traverse festgeklemmten Teile der Schweißvorrichtung 8 mit der Positioniervorrichtung 7 zu versetzen.

Zum Versetzen einer Schweißvorrichtung 8 wird zunächst die Positioniervorrichtung 7 auf der Laufschiene 5 aus der Parkposition oder einer anderen Position vor die zu versetzende Schweißvorrichtung 8 geschoben. Dabei fahren die Klauen 7102 der Positioniervorrichtung 7 hinter den Bund des Pilzkopfes 820, zunächst noch ohne Kontakt zu dem Pilzkopf 820 zu haben. Dann werden die Positioniervorrichtung 7 und die zu versetzende Schweißvorrichtung 8 an einander gekuppelt. Dazu wird die Kolbenstange 7101 des Linearantriebes der Positioniervorrichtung 7 in den Kolben eingezogen, d.h. von der Schweißvorrichtung 8 weggezogen. Dadurch kommen die Klauen 7102 in Kontakt zu dem Bund des Pilzkopfes 820 an der Stange 813 des Klemmmechanismus 81. Da die Druckfeder 812 des Klemmmechanismus 81 stärker ist als die Druckfeder 72 der Positioniervorrichtung 7, wird die Positioniervorrichtung 7 gegen die feststehende Klemmbacke 810 der Schweißvorrichtung 8 gezogen. Dabei greifen die konischen Erhebungen 7103 des ersten Löse- und Kupplungsmittels 710 in die konischen Ausnehmungen 821 der zweiten Kupplungsmittel 82 ein und die Positioniervorrichtung 7 und die Schweißvorrichtung 8 sind kraft- und formschlüssig miteinander verbunden und dadurch aneinander gekuppelt.

In einem weiteren Schritt muss nun nach dem Kuppeln der Positioniervorrichtung 7 mit der Schweißvorrichtung 8 die Klemmverbindung zwischen der Schweißvorrichtung 8 und der oberen Traverse 3 gelöst werden. Dazu wird der Linearantrieb 7100 der Positioniervorrichtung 7 weiter betätigt und die Kolbenstange 7101 zieht die Stange 813 des Klemmmechanismus 81 in Richtung der Positioniervorrichtung 7 gegen den Druck der Druckfeder 812 des Klemmmechanismus 81. Die bewegliche Klemmbacke 811 kommt dadurch von der Wand der Schwalbenschwanznut 31 frei und die Klemmverbindung zwischen der Schweißvorrichtung 8 und der oberen Traverse 3 ist gelöst.

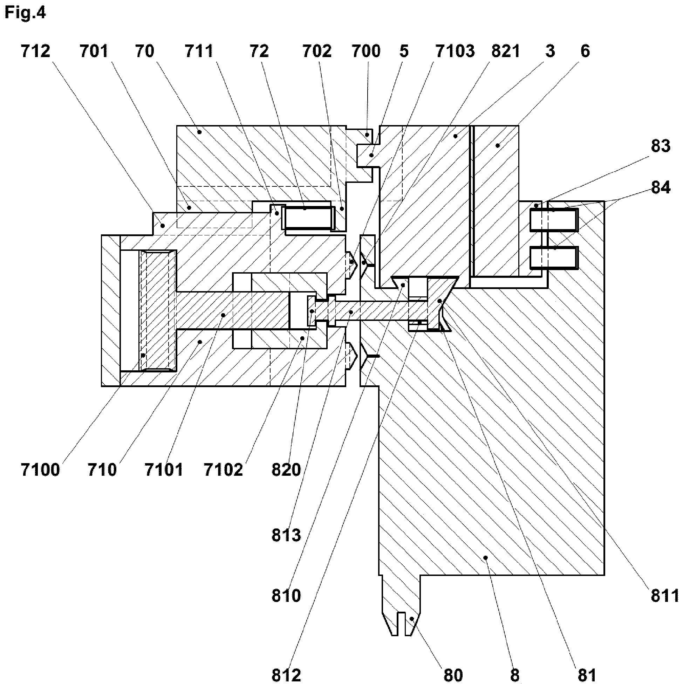

Die Schweißvorrichtung 8 hängt dann vollständig mit dem gesamten Gewicht an der Positioniervorrichtung 7. Durch die Federn 84, die auf die Kontaktelemente 83 drücken, wird die Einheit aus Schweißvorrichtung 8 und geführtem Teil 712 der zweiten Linearführung (und aller daran befestigter Teile 710, 711) und insbesondere der feststehenden Klemmbacke 810 nach hinten (in der Ebene der Fig. 4 nach rechts) gerückt. Gleichzeitig rutscht diese Einheit aufgrund der Schwerkraft nach unten, so dass sich insgesamt eine kleine Drehung ergibt. Dadurch kommt die Schweißvorrichtung frei und die Positioniervorrichtung 7 kann mit der daran hängenden Schweißvorrichtung 8 längs der Laufschiene 5 der ersten Linearführung verschoben werden. Ist die neue, gewünschte Position der Schweißvorrichtung 8 erreicht, kann der Pneumatikzylinder des Linearantriebs 7100 der Positioniervorrichtung 7 entlüftet werden. Die Kolbenstange 7101 und die daran gekuppelte Stange 813 des Klemmmechanismus 81 werden entlastet und die Druckfeder 812 des Klemmmechanismus 81 drückt die bewegliche Klemmbacke 811 gegen die Wand der Schwalbenschwanznut 31, wodurch die Schweißvorrichtung 8 erneut an der oberen Traverse 3 festgeklemmt ist.

Außerdem drückt die Druckfeder 72 der Positioniervorrichtung 7 dieselbe von der Schweißvorrichtung 8 weg, so dass das erste Löse-und Kupplungsmittel 710 von dem zweiten Kupplungsmittel 82 gelöst wird. Die Verbindung zwischen der Positioniervorrichtung 7 und der Schweißvorrichtung 8 ist gelöst und die Positioniervorrichtung 7 kann frei auf der Laufschiene 5 verschoben werden, zum Beispiel um in die Parkposition verschoben zu werden, in welcher sich die Positioniervorrichtung 7 befindet, wenn die Positioniervorrichtung 7 nicht zum Versetzen einer Schweißvorrichtung 8 benötigt wird.

### Bezugszeichen:

- S: Schweißmaschine
- 1: rechter Maschinenständer
- 2: linker Maschinenständer
- 3: erste, obere Traverse
- 30: Schwalbenschwanznut
- 4: zweite, untere Traverse
- 5: Laufschiene, führendes Teil einer ersten Linearführung
- 6: erste, obere Stromschiene
- 7: Positioniervorrichtung
- 70: Schlitten
- 700: geführtes Teil der ersten Linearführung
- 701: führendes Teil einer zweiten Linearführung
- 702: erstes Stützelement
- 710: erstes Kupplungsmittel/Lösemittel
- 7100: Linearantrieb der Positioniervorrichtung
- 7101: Kolbenstange des Linearantriebs
- 7102: Klaue
- 7103: konische Erhebungen
- 711: zweites Stützelement
- 712: geführtes Teil der zweiten Linearführung
- 72: Druckfeder
- 8: Schweißvorrichtung
- 80: erste, obere Elektrode
- 81: Klemmmechanismus
- 810: festestehende Klemmbacke
- 811: bewegliche Klemmbacke
- 812: Druckfeder
- 813: Stange
- 82: zweites Kupplungsmittel
- 820: Pilzkopf
- 821: konische Ausnehmungen
- 83: Kontaktelement
- 84: Federn

## Patentansprüche

1. Schweißmaschine (S), insbesondere Gitterschweißmaschine, mit wenigstens zwei versetzbaren Schweißvorrichtungen (8),
- wobei jede Schweißvorrichtung (8) wenigstens eine erste Elektrode (80) aufweist,
- wobei jede erste Elektrode (80) zusammen mit einer von mehreren zweiten Elektroden zum Aneinanderschweißen zweier Bauteile, insbesondere zweier Stäbe, zu einem Produkt, insbesondere zu einem Gitter verwendbar ist,
- wobei die Schweißmaschine (S) wenigstens eine erste Traverse (3) aufweist,
- wobei jede Schweißvorrichtung (8) einen Klemmmechanismus (81) aufweist und die Schweißvorrichtungen (8) mittels der Klemmmechanismen (81) an die wenigstens eine erste Traverse (3) in wählbaren Positionen festklemmbar und damit befestigbar sind,
- wobei die Schweißmaschine (S) wenigstens eine Positioniervorrichtung (7) hat,
- wobei die Schweißmaschine (S) wenigstens eine erste Linearführung mit einem führenden Teil (5) und wenigstens einem geführten Teil (700) hat, wobei das wenigstens eine geführte Teil (700) von der wenigstens einen Positioniervorrichtung (7) umfasst ist und entlang dem führenden Teil (5) verschiebbar ist,
- wobei die wenigstens eine Positioniervorrichtung (7) wenigstens ein erstes Kupplungsmittel (710) hat und jede der Schweißvorrichtungen (8) wenigstens ein zweites Kupplungsmittel (82) hat und das wenigstens eine erste Kupplungsmittel (710) und jeweils eines der wenigstens einen zweiten Kupplungsmittel (82) mit einander kuppelbar sind,
- wobei die wenigstens eine Positioniervorrichtung (7) ein Lösemittel (710) hat, um den Klemmmechanismus (81) einer angekuppelten Schweißvorrichtung (8) von der Traverse (3) zu lösen,
- wobei ein Gewicht einer an die wenigstens eine Positioniervorrichtung (7) angekuppelten Schweißvorrichtung (8) lediglich von der wenigstens einen Positioniervorrichtung (7) zumindest überwiegend getragen ist,
**dadurch gekennzeichnet,**
**dass** das Lösemittel (710) und das erste Kupplungsmittel (710) einen einzigen gemeinsamen Linearantrieb (7100) umfassen.

2. Schweißmaschine (S) nach Anspruch 1, **dadurch gekennzeichnet, dass** das Gewicht der an die wenigstens eine Positioniervorrichtung (7) angekuppelten Schweißvorrichtung (8) über die wenigstens eine Positioniervorrichtung (7) in die erste Linearführung eingeleitet wird.

3. Schweißmaschine (S) nach Anspruch 1 oder 2, **dadurch gekennzeichnet, dass** die wenigstens eine Positioniervorrichtung (7) eine zweite Linearführung mit einem führenden Teil (701) und einem geführten Teil (712) aufweist, wobei das führende Teil (701) der zweiten Linearführung mit dem geführten Teil (700) der ersten Linearführung fest verbunden ist, während das geführte Teil (712) der zweiten Linearführung und das geführte Teil (700) der ersten Linearführung zueinander verschiebbar verbunden sind.

4. Schweißmaschine (S) nach Anspruch 3, **dadurch gekennzeichnet, dass** das wenigstens eine erste Kupplungsmittel (710) mit dem geführten Teil (712) der zweiten Linearführung fest verbunden ist.

5. Schweißmaschine (S) nach Anspruch 3 oder 4, **dadurch gekennzeichnet, dass** das Lösemittel (710) mit dem geführten (712) Teil der zweiten Linearführung fest verbunden ist.

6. Schweißmaschine (S) nach einem der Ansprüche 3 bis 5, **dadurch gekennzeichnet, dass** die wenigstens eine Positioniervorrichtung (7) eine Feder (72) aufweist, die zwischen einem ersten Stützelement (702) und einem zweiten Stützelement (711) abgestützt ist, wobei das erste Stützelement (702) fest mit dem führenden Teil (701) der zweiten Linearführung verbunden ist und das zweite Stützelement (711) mit dem geführten Teil (712) der zweiten Linearführung verbunden ist.

7. Schweißmaschine (S) nach einem der Ansprüche 1 bis 6, **dadurch gekennzeichnet, dass** der Klemmmechanismus (81) jeder Schweißvorrichtung (8) eine Feder (812) und eine Klemmbacke (811) umfasst, wobei die Klemmbacke (811) von der Feder (812) mit einer Kraft zum Festklemmen der Schweißvorrichtung (8) an der Traverse (3) beaufschlagt ist und die Klemmbacke (811) gegen die Kraft der Feder (812) zum Lösen der Klemmverbindung zwischen Schweißvorrichtung (8) und Traverse (3) verschiebbar ist.

8. Schweißmaschine (S) nach Anspruch 7, **dadurch gekennzeichnet, dass** das Lösemittel (701) der wenigstens einen Positioniervorrichtung (7) zumindest mit dem Klemmmechanismus (81) einer angekuppelten Schweißvorrichtung (8) verbunden ist oder verbindbar ist und dass mittels des Linearantriebs (7100) des Lösemittels (710) die Klemmbacke (811) des Klemmmechanismus (81) gegen die Kraft der Feder (812) zum Lösen der Klemmverbindung zwischen Schweißvorrichtung (8) und Traverse (3) verschiebbar ist.

9. Schweißmaschine (S) nach einem der Ansprüche 1 bis 8, **dadurch gekennzeichnet, dass** das Lösemittel (710) und/oder das erste Kupplungsmittel (710) eine Klaue (7102) aufweist, die mit jeweils einem Zapfen oder Pilzkopf (820) des Klemmmechanismus (81) einer der Schweißvorrichtungen (8) verbindbar ist.

10. Schweißmaschine (S) nach einem der Ansprüche 1 bis 9, **dadurch gekennzeichnet, dass** die Positioniervorrichtung (7) durch die erste Linearführung mit und ohne angekuppelte Schweißvorrichtung (8) frei verschiebbar ist.

11. Schweißmaschine (S) nach einem der Ansprüche 1 bis 10, **dadurch gekennzeichnet, dass** die ersten und/oder die zweiten Kupplungsmittel (710, 82) komplementäre Elemente, zum Beispiel konische Erhebungen (7103) und konische Ausnehmungen (821), aufweisen.

12. Schweißmaschine (S) nach einem der Ansprüche 1 bis 11, **dadurch gekennzeichnet, dass** die Schweißmaschine (S) wenigstens eine erste Stromschiene (6) zur Stromversorgung der jeweils ersten Elektrode (80) jeder Schweißvorrichtung (8) aufweist, wobei die Schweißvorrichtung (8) ein Kontaktelement (83) aufweist, welches im festgeklemmten Zustand der Schweißvorrichtung (8) elektrischen Kontakt zu der wenigstens einen ersten Stromschiene (6) hat und welches bei gelöstem Klemmmechanismus (81) frei von der wenigstens einen ersten Stromschiene (6) ist.

13. Schweißmaschine (S) nach einem der Ansprüche 1 bis 12, **dadurch gekennzeichnet, dass** jede Schweißvorrichtung (8) einen zweiten Linearantrieb aufweist, mit welchem die wenigstens eine erste Elektrode der Schweißvorrichtung (8) verfahrbar ist.

14. Schweißmaschine (S) nach einem der Ansprüche 1 bis 13, **dadurch gekennzeichnet, dass** jede Schweißvorrichtung (8) eine zweite Elektrode aufweist, die in einem Elektrodenhalter gehalten ist, und dass der Elektrodenhalter mit dem Klemmmechanismus der Schweißvorrichtung (8) an der Traverse (3) festklemmbar ist.

15. Schweißmaschine (S) nach einem der Ansprüche 1 bis 13, **dadurch gekennzeichnet,**
- **dass** jede Schweißvorrichtung (8) eine zweite Elektrode aufweist, die in einem Elektrodenhalter gehalten ist, und
- **dass** der Elektrodenhalter mit einem zweiten Klemmmechanismus der Schweißvorrichtung (8) in wählbaren Positionen an einer zweiten Traverse (4) festklemmbar ist,
- **dass** die wenigstens eine Positioniervorrichtung (7) wenigstens ein drittes Kupplungsmittel hat und jeder Elektrodenhalter wenigstens ein viertes Kupplungsmittel hat oder mit einem solchen verbunden ist und das wenigstens eine dritte Kupplungsmittel und jeweils eines der wenigstens einen vierten Kupplungsmittel miteinander kuppelbar sind,
- **dass** die wenigstens eine Positioniervorrichtung (7) ein zweites Lösemittel hat, um den zweiten Klemmmechanismus eines angekuppelten Elektrodehalters von der zweiten Traverse (4) zu lösen, wobei ein Gewicht eines an die wenigstens eine Positioniervorrichtung angekuppelten Elektrodenhalters und ggf. weitere damit fest verbundene Teile lediglich von der wenigstes einen Positioniervorrichtung (7) getragen sind.

## Claims

1. Welding machine (S), in particular grid-welding machine, having at least two movable welding apparatuses (8),
- wherein each welding apparatus (8) has at least one first electrode (80),
- wherein each first electrode (80) can be used together with one of a plurality of second electrodes for welding together two components, in particular two bars, to form a product, in particular to form a grid,
- wherein the welding machine (S) has at least one first crossmember (3),
- wherein each welding apparatus (8) has a clamping mechanism (81), and the welding apparatuses (8) can be clamped firmly onto the at least one first crossmember (3) in selectable positions, and fastened thereto, by means of the clamping mechanisms (81),
- wherein the welding machine (S) has at least one positioning apparatus (7),
- wherein the welding machine (S) has at least one first linear guide with a guiding part (5) and at least one guided part (700), wherein the at least one guided part (700) is part of the at least one positioning apparatus (7) and can be displaced along the guiding part (5),
- wherein the at least one positioning apparatus (7) has at least one first coupling means (710) and each of the welding apparatuses (8) has at least one second coupling means (82), and the at least one first coupling means (710) and one of the at least one second coupling means (82) can be coupled to one another,
- wherein the at least one positioning apparatus (7) has a disengaging means (710), in order to disengage the clamping mechanism (81) of a coupled-on welding apparatus (8) from the crossmember (3),
- wherein a weight of a welding apparatus (8) coupled onto the at least one positioning apparatus (7) is borne, at least predominantly, merely by the at least one positioning apparatus (7),
**characterized**
**in that** the disengaging means (710) and the first coupling means (710) comprise a single common linear drive (7100).

2. Welding machine (S) according to Claim 1, **characterized in that** the weight of the welding apparatus (8) coupled onto the at least one positioning apparatus (7) is introduced into the first linear guide via the at least one positioning apparatus (7).

3. Welding machine (S) according to Claim 1 or 2, **characterized in that** the at least one positioning apparatus (7) has a second linear guide with a guiding part (701) and a guided part (712), wherein the guiding part (701) of the second linear guide is fixed to the guided part (700) of the first linear guide, whereas the guided part (712) of the second linear guide and the guided part (700) of the first linear guide are connected in a displaceable manner in relation to one another.

4. Welding machine (S) according to Claim 3, **characterized in that** the at least one first coupling means (710) is fixed to the guided part (712) of the second linear guide.

5. Welding machine (S) according to Claim 3 or 4, **characterized in that** the disengaging means (710) is fixed to the guided part (712) of the second linear guide.

6. Welding machine (S) according to one of Claims 3 to 5, **characterized in that** the at least one positioning apparatus (7) has a spring (72), which is supported between a first supporting element (702) and a second supporting element (711), wherein the first supporting element (702) is fixed to the guiding part (701) of the second linear guide and the second supporting element (711) is connected to the guided part (712) of the second linear guide.

7. Welding machine (S) according to one of Claims 1 to 6, **characterized in that** the clamping mechanism (81) of each welding apparatus (8) comprise a spring (812) and a clamping jaw (811), wherein the spring (812) subjects the clamping jaw (811) to a force in order to clamp the welding apparatus (8) firmly on the crossmember (3), and the clamping jaw (811) can be displaced counter to the force of the spring (812) in order for the clamping connection between the welding apparatus (8) and crossmember (3) to be disengaged.

8. Welding machine (S) according to Claim 7, **characterized in that** the disengaging means (701) of the at least one positioning apparatus (7) is, or can be, connected at least to the clamping mechanism (81) of the coupled-on welding apparatus (8), and **in that** the linear drive (7100) of the disengaging means (710) can be used to displace the clamping jaw (811) of the clamping mechanism (81) counter to the force of the spring (812) in order for the clamping connection between the welding apparatus (8) and crossmember (3) to be disengaged.

9. Welding machine (S) according to one Claims 1 to 8, **characterized in that** the disengaging means (710) and/or the first coupling means (710) have/has a claw (7102), which can be connected to a respective pin or mushroom head (820) of the clamping mechanism (81) of one of the welding apparatuses (8).

10. Welding machine (S) according to one of Claims 1 to 9, **characterized in that** the positioning apparatus (7) can be displaced freely by way of the first linear guide with and without a welding apparatus (8) coupled on.

11. Welding machine (S) according to one of Claims 1 to 10, **characterized in that** the first and/or the second coupling means (710, 82) have/has complementary elements, for example conical elevations (7103) and conical recesses (821).

12. Welding machine (S) according to one of Claims 1 to 11, **characterized in that** the welding machine (S) has at least one first conductor rail (6) for supplying power to the respectively first electrode (80) of each welding apparatus (8), wherein the welding apparatus (8) has a contact element (83) which, in the firmly clamped state of the welding apparatus (8), is in electrical contact with the at least one first conductor rail (6) and which, in the case of the clamping mechanism (81) being disengaged, is free of the at least one first conductor rail (6).

13. Welding machine (S) according to one of Claims 1 to 12, **characterized in that** each welding apparatus (8) has a second a linear drive, which can displace the at least one first electrode of the welding apparatus (8).

14. Welding machine (S) according to one of Claims 1 to 13, **characterized in that** each welding apparatus (8) has a second electrode, which is retained in an electrode holder, and **in that** the electrode holder can be clamped firmly on the crossmember (3) by the clamping mechanism of the welding apparatus (8).

15. Welding machine (S) according to one of Claims 1 to 13, **characterized**
- **in that** each welding apparatus (8) has a second electrode, which is retained in an electrode holder, and
- **in that** the electrode holder can be clamped firmly in selectable positions on a second crossmember (4) by a second clamping mechanism of the welding apparatus (8), and
- **in that** the at least one positioning apparatus (7) has at least one third coupling means and each electrode holder has at least one fourth coupling means, or is connected to one such, and the at least one third coupling means and in each case one of the at least one fourth coupling means can be coupled to one another, and
- **in that** the at least one positioning apparatus (7) has a second disengaging means, in order to disengage the second clamping mechanism of a coupled-on electrode holder from the second crossmember (4), wherein a weight of an electrode holder coupled onto the at least one positioning apparatus and possible further parts fixed thereto are borne merely by the at least one positioning apparatus (7).

## Revendications

1. Soudeuse (S), notamment soudeuse de treillis, avec au moins deux dispositifs de soudage (8) déplaçables,
- chaque dispositif de soudage (8) comportant au moins une première électrode (80),
- chaque première électrode (80) étant utilisable, en commun avec l'une de plusieurs deuxièmes électrodes pour souder l'un à l'autre deux éléments constitutifs, notamment deux barres, en un produit, notamment en un treillis,
- la soudeuse (S) comportant au moins une première traverse (3),
- chaque dispositif de soudage (8) comportant un mécanisme de serrage (81) et au moyen des mécanismes de serrage (81), les dispositifs de soudage (8) pouvant être serrés et donc fixés dans des positions sélectionnables contre l'au moins une première traverse (3),
- la soudeuse (S) ayant au moins un dispositif de positionnement (7),
- la soudeuse (S) ayant au moins un premier guide linéaire avec une pièce de guidage (5) et au moins une pièce guidée (700), l'au moins une pièce guidée (700) étant comprise dans l'au moins un dispositif de positionnement (7) et étant déplaçable le long de la pièce de guidage (5),
- l'au moins un dispositif de positionnement (7) ayant au moins un premier moyen d'accouplement (710) et chacun des dispositifs de soudage (8) ayant au moins un deuxième moyen d'accouplement (82) et l'au moins un premier moyen d'accouplement (710) et chaque fois au moins l'un des au moins un deuxième moyen d'accouplement (82) pouvant être accouplés l'un à l'autre,
- l'au moins un dispositif de positionnement (7) ayant un moyen de désolidarisation (710) pour désolidariser le mécanisme de serrage (81) d'un dispositif de soudage (8) accouplé de la traverse (3),
- un poids d'un dispositif de soudage (8) accouplé à l'au moins un dispositif de positionnement (7) étant uniquement porté au moins majoritairement par l'au moins un dispositif de positionnement (7),
**caractérisée en ce que**
le moyen de désolidarisation (710) et le premier moyen d'accouplement (710) comprennent un unique entraînement linéaire (7100) commun.

2. Soudeuse (S) selon la revendication 1, **caractérisée en ce que** le poids du dispositif de soudage (8) accouplé à l'au moins un dispositif de positionnement (7) est introduit dans le premier guide linéaire par l'intermédiaire de l'au moins un dispositif de positionnement (7).

3. Soudeuse (S) selon la revendication 1 ou 2, **caractérisée en ce que** l'au moins un dispositif de positionnement (7) comporte un deuxième guide linéaire avec une pièce de guidage (701) et une pièce guidée (712), la pièce de guidage (701) du deuxième guide linéaire étant fixement reliée avec la pièce guidée (700) du premier guide linéaire, alors que la pièce guidée (712) du deuxième guide linéaire et la pièce guidée (700) du premier guide linéaire sont reliées en étant déplaçables l'une vers l'autre.

4. Soudeuse (S) selon la revendication 3, **caractérisée en ce que** l'au moins un premier moyen d'accouplement (710) est fixement relié avec la pièce guidée (712) du deuxième guide linéaire.

5. Soudeuse (S) selon la revendication 3 ou 4, **caractérisée en ce que** le moyen de désolidarisation (710) est fixement relié avec la pièce guidée (712) du deuxième guide linéaire.

6. Soudeuse (S) selon l'une quelconque des revendications 3 à 5, **caractérisée en ce que** l'au moins un dispositif de positionnement (7) comporte un ressort (72) qui est appuyé entre un premier élément d'appui (702) et un deuxième élément d'appui (711), le premier élément d'appui (702) étant fixement relié avec la pièce de guidage (701) du deuxième guide linéaire et le deuxième élément d'appui (711) étant fixement relié avec la pièce guidée (712) du deuxième guide linéaire.

7. Soudeuse (S) selon l'une quelconque des revendications 1 à 6, **caractérisée en ce que** le mécanisme de serrage (81) des dispositifs de soudage (8) comporte un ressort (812) et une mâchoire de serrage (811), la mâchoire de serrage (811) étant soumise par le ressort (812) à une force pour serrer le dispositif de soudage (8) contre la traverse (3) et la mâchoire de serrage (811) étant déplaçable contre la force du ressort (812) pour désolidariser la liaison par serrage entre le dispositif de soudage (8) et la traverse (3) .

8. Soudeuse (S) selon la revendication 7, **caractérisée en ce que** le moyen de désolidarisation (701) de l'au moins un dispositif de positionnement (7) est ou peut être relié au moins avec le mécanisme de serrage (81) d'un dispositif de soudage (8) accouplé et **en ce qu'**au moyen de l'entraînement linéaire (7100) du moyen de désolidarisation (710), la mâchoire de serrage (811) du mécanisme de serrage (81) est déplaçable contre la force du ressort (812), pour désolidariser la liaison par serrage entre le dispositif de soudage (8) et la traverse (3).

9. Soudeuse (S) selon l'une quelconque des revendications 1 à 8, **caractérisée en ce que** le moyen de désolidarisation (710) et/ou le premier moyen d'accouplement (710) comportent une griffe (7102) qui peut être reliée avec chaque fois un tenon ou une tête de champignon (820) du mécanisme de serrage (81) de l'un des dispositifs de soudage (8) .

10. Soudeuse (S) selon l'une quelconque des revendications 1 à 9, **caractérisée en ce que** le dispositif de positionnement (7) peut être librement déplacé via le premier guidage linéaire, avec ou sans dispositif de soudage (8) accouplé.

11. Soudeuse (S) selon l'une quelconque des revendications 1 à 10, **caractérisée en ce que** les premiers et/ou les deuxièmes moyens d'accouplement (710, 82) comportent des éléments complémentaires, par exemple des élévations (7103) coniques et des évidements (821) coniques.

12. Soudeuse (S) selon l'une quelconque des revendications 1 à 11, **caractérisée en ce que** la soudeuse (S) comporte au moins une première barre conductrice (6) pour l'alimentation électrique de respectivement la première électrode (80) de chaque dispositif de soudage (8), le dispositif de soudage (8) comportant un élément de contact (83), lequel lorsque le dispositif de soudage (8) est serré, est en contact électrique avec l'au moins une première barre conductrice (6) et lorsque le mécanisme de serrage (81) est désolidarisé, est libéré de l'au moins une première barre conductrice (6) .

13. Soudeuse (S) selon l'une quelconque des revendications 1 à 12, **caractérisée en ce que** chaque dispositif de soudage (8) comporte un deuxième entraînement linéaire, avec lequel l'au moins une première électrode du dispositif de soudage (8) est déplaçable.

14. Soudeuse (S) selon l'une quelconque des revendications 1 à 13, **caractérisée en ce que** chaque dispositif de soudage (8) comporte une deuxième électrode qui est maintenue dans un porte-électrode et **en ce que** le porte-électrode peut être serré avec le mécanisme de serrage du dispositif de soudage (8) sur la traverse (3).

15. Soudeuse (S) selon l'une quelconque des revendications 1 à 13, **caractérisée en ce que**
- chaque dispositif de soudage (8) comporte une deuxième électrode qui est maintenue dans un porte-électrode et
- le porte-électrode peut se serrer avec un deuxième mécanisme de serrage du dispositif de soudage (8) dans des positions sélectionnables sur une deuxième traverse (4),
- l'au moins un dispositif de positionnement (7) a au moins un troisième moyen d'accouplement et chaque porte-électrode a au moins un quatrième moyen d'accouplement ou est relié avec un tel et en l'au moins un troisième moyen d'accouplement et chaque fois l'un des au moins un quatrième moyen d'accouplement peuvent s'accoupler l'un à l'autre,
- l'au moins un dispositif de positionnement (7) a un deuxième moyen de désolidarisation pour désolidariser le deuxième mécanisme de serrage d'un porte-électrode accouplé de la deuxième traverse (4), un poids d'un porte-électrode accouplé à l'au moins un dispositif de positionnement et le cas échéant d'autres pièces fixement reliées à celui-ci étant uniquement portés par l'au moins un dispositif de positionnement (7).
